# EUROPEAN PATENT APPLICATION

(11) **EP 4 737 154 A1**
(43) Date of publication of application: **06.05.2026**
(21) Application number: 24209414.2
(22) Date of filing: 29.10.2024
(51) Int. Cl.: B60K 1/04

(54) **A VEHICLE BATTERY PACK MOUNTING BRACKET**

(71) Applicant: Volvo Truck Corporation, 405 08 Göteborg (SE)
(72) Inventor: KUMAR, Praveen, 585401 Bidar (IN); SINGH, Ranjeet, 482001 Jabalpur (IN); MANDAL, Goutam, 732121 MALDA (IN)
(74) Representative: Zacco Sweden AB

(57) **Abstract**

A vehicle battery pack mounting bracket, comprising a connecting part configured to be fastened to a supporting structure of a vehicle, and a battery pack receiving part extending from the connecting part. The battery pack receiving part has first, second and third abutment surface portions configured to receive and support respective mating surface portions of a battery pack. The first and second abutment surface portions are located on respective sides of a geometrical plane, wherein in a Cartesian coordinate system having an x-axis, a y-axis and a z-axis, the first abutment surface portion is facing in a first direction obliquely to both the x-axis and the y-axis, the second abutment surface portion is facing in a different second direction obliquely to both the x-axis and the y-axis, wherein the third abutment surface portion is spaced apart from the first and the second abutment surface portions along the x-axis.

## Description

### TECHNICAL FIELD

The disclosure relates generally to a mounting bracket. In particular aspects, the disclosure relates to a vehicle battery pack mounting bracket. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Battery packs for heavy-duty electric vehicles are often mounted to the vehicle by means of mounting brackets. In order to counteract lateral movement of the battery packs multiple tie rods are installed. The assembly time is quite long during production, and also the aftermarket time for subsequent service of the electric energy system which includes the battery packs may be quite long.

### SUMMARY

According to a first aspect of the disclosure, there is provided a vehicle battery pack mounting bracket, comprising:
- a connecting part configured to be fastened to a supporting structure of a vehicle,
- a battery pack receiving part extending from the connecting part, the battery pack receiving part having:
   - a top side towards which a battery pack to be received is lowerable,
   - a bottom side opposite to the top side,
   - a first abutment surface portion,
   - a second abutment surface portion, and
   - at least a third abutment surface portion,

   wherein the first, the second and the third abutment surface portions are configured to receive and support respective mating surface portions of a battery pack, wherein the first and the second abutment surface portions are located on respective sides of a geometrical plane, wherein in a Cartesian coordinate system having an x-axis, a y-axis and a z-axis:
      - the z-axis extends from said bottom side perpendicularly to said top side,
      - said geometrical plane extends in parallel with the x-axis and the z-axis, and perpendicularly to the y-axis,
   wherein the first abutment surface portion is facing in a first direction obliquely to both the x-axis and the y-axis,
   wherein the second abutment surface portion is facing in a different second direction obliquely to both the x-axis and the y-axis,
   wherein the third abutment surface portion is spaced apart from the first and the second abutment surface portions along the x-axis.

The first aspect of the disclosure may seek to facilitate installation of a vehicle battery pack to a vehicle, and also facilitate subsequent service related to the vehicle battery pack. A technical benefit may include that by having a first and the second abutment surface portions facing obliquely to both the x-axis and y-axis, and also spaced apart from the third abutment surface portion along the x-axis, not only may undesired longitudinal movement of a received battery pack be counteracted, but also undesired lateral movements may be counteracted, without requiring the provision of a large number of tie rods (enabling at least some of the tie rods to be eliminated compared to traditional mountings, may also reduce the overall weight). In particular, the location of the at least one third abutment surface portion relative to the location of the first and second abutment surface portions may enable a longitudinally restricting structure for a received battery pack, whereas the obliqueness of the first and second abutment surface portions may enable a laterally restricting structure.

It should be understood that in this disclosure a "longitudinal direction" is referred to as a direction coinciding with or being parallel with a roll axis of the heavy-duty vehicle to which the vehicle battery pack mounting bracket is, or will be, installed. A "lateral direction" is referred to as a direction coinciding with or being parallel with a pitch axis of the heavy-duty vehicle. A "vertical direction" is referred to as a direction coinciding with or being parallel with a yaw axis of the heavy-duty vehicle.

Optionally in some examples, including in at least one preferred example, the first abutment surface portion may be facing away from said geometrical plane in said first direction, and wherein the second abutment surface portion may be facing away from said geometrical plane in said different second direction. A technical benefit may include that a symmetrical configuration may be achieved with respect to said geometrical plane, which may facilitate self-centering of the battery pack to be received. Furthermore, the lateral forces may become more balanced.

Optionally in some examples, including in at least one preferred example, wherein said first direction is oblique to the z-axis, and
wherein said second direction is oblique to the z-axis.

A technical benefit may include that this may provide additional guidance when the battery pack is lowered on to the top surface enabling the battery pack to come into proper engagement more easily. Furthermore, due to the effect of gravity, having the first and second abutment surface portions directed obliquely to the z-axis may also allow those abutment surface portions to contribute to providing support to the received battery pack in the vertical direction.

Optionally in some examples, including in at least one preferred example, said top side may be located upwardly of said opposite bottom side with respect to the z-axis, wherein the first abutment surface portion may be facing obliquely upwardly with respect to the z-axis, wherein the second abutment surface portion may be facing obliquely upwardly with respect to the z-axis. Similarly to above, a technical benefit may include that this may provide additional guidance when the battery pack is lowered on to the top surface enabling the battery pack to come into proper engagement more easily, and that due to the effect of gravity the first and second abutment surface portions may contribute to providing support to the received battery pack in the vertical direction.

As will be discussed in more detail in other examples further below, in addition to the third abutment surface portion, there may suitably also be a fourth abutment surface portion spaced apart from the first and second abutment surface portions along the x-axis. For instance, such first, second, third and fourth abutment surface portions may be symmetrically arranged with respect to said geometrical plane extending in parallel with the x-axis and the z-axis and may also be symmetrical with respect to a perpendicular geometrical plane which is parallel with y-axis and the z-axis. However, even though such symmetrical configuration may provide a well-balanced battery pack receiving part, it should be understood that the battery pack receiving part does not need to be symmetrical for enabling both laterally and longitudinally restricting functionality with respect to the received battery pack.

Optionally in some examples, including in at least one preferred example, the vehicle battery pack mounting bracket may further comprise:
a fourth abutment surface portion configured to receive and support a respective mating surface portion of a battery pack, wherein the third and the fourth abutment surface portions are located on respective sides of said geometrical plane,
wherein the third abutment surface portion is facing in a third direction obliquely to both the x-axis and the y-axis,
wherein the fourth abutment surface portion is facing in a different fourth direction obliquely to both the x-axis and the y-axis.

A technical benefit may include that also the third and fourth abutment surface portions may contribute to restricting lateral movement of a received battery pack.

Optionally in some examples, including in at least one preferred example, the third abutment surface portion may be facing away from said geometrical plane in said third direction, and the fourth abutment surface portion may be facing away from said geometrical plane in said different fourth direction. Analogously to above, a technical benefit may include that a symmetrical configuration may be achieved with respect to said geometrical plane, which may facilitate self-centering of the battery pack to be received. Furthermore, the lateral forces may become more balanced.

Optionally in some examples, including in at least one preferred example,
said third direction may be oblique to the z-axis, and
said fourth direction may be oblique to the z-axis.

Similarly to what has been discussed before with respect to the first and second abutment surface portions, a technical benefit may include that the third and fourth abutment surface portion may provide additional guidance when the battery pack is lowered on to the top surface enabling the battery pack to come into proper engagement more easily. Furthermore, due to the effect of gravity, having the third and fourth abutment surface portions directed obliquely to the z-axis may also allow those abutment surface portions to contribute to providing support to the received battery pack in the vertical direction.

Optionally in some examples, including in at least one preferred example, said geometrical plane may be a first geometrical plane, wherein in relation to a second geometrical plane which is perpendicular to the first geometrical plane, and which extends in parallel with the y-axis and the z-axis, the first and the second abutment surface portions on the one hand and the third and the fourth abutment surface portions on the other hand may be located on respective sides of the second geometrical plane. A technical benefit may include that this may contribute to a more robust support of a received battery pack as the four abutment surface portions will be well distributed across the battery pack receiving part of the vehicle battery pack mounting bracket.

Optionally in some examples, including in at least one preferred example, each one of the first, second, third and fourth abutment surface portions may be facing away from said second geometrical plane. A technical benefit may include that this may contribute to self-centering of a battery pack being lowered onto the battery pack receiving part of the vehicle battery pack mounting bracket. The lateral support function may also become more balanced.

Optionally in some examples, including in at least one preferred example, the vehicle battery pack mounting bracket may further comprise an elongated groove extending along the y-axis in said second geometrical plane. A technical benefit may include that the elongated groove may suitably receive a matching elongated beam, protrusion or the like forming part of the battery pack to be received. Hereby, the guiding of the battery pack into place on the battery pack receiving part may be further facilitated and also an even more robust support may be achieved.

Optionally in some examples, including in at least one preferred example, the battery pack receiving part may further comprise a housing having an interior volume and at least one spring-loaded plunger arrangement, wherein the spring-loaded plunger arrangement may be configured to at least partly absorb an externally generated force which is directed towards the interior volume, and which is exerted on the spring-loaded plunger arrangement. A technical benefit may include that this may improve the shock absorbing capability of the vehicle battery pack mounting bracket. This may be particularly desirable for a heavy-duty vehicle being driven on a bumpy road. The placement of the spring-loaded plunger arrangement, and the number of such spring-loaded plunger arrangements, may be selected as desired. For instance, in some examples, one or more spring-loaded plunger arrangements may be provided at the various abutment surface portions. In some examples, a side of the battery pack receiving portion intended to be facing laterally away from the vehicle may be provided with one or more spring-loaded plunger arrangements, thereby improving lateral crash protection performance. In some examples, the bottom of the battery pack receiving portion may be provided with one or more spring-loaded plunger arrangements to allow for better damping of vertical forces, for example, when driving on a bumpy road. Any combination of the above locations is, of course, also conceivable.

Optionally in some examples, including in at least one preferred example, the spring-loaded plunger arrangement may comprise:
- an actuator portion which may be pressed by said externally generated force in a direction towards said internal volume,
- a plunger operatively connected to the actuator portion and guidable within a cylinder portion which forms part of, or which is connected to the housing, wherein movement of the actuator portion causes the plunger to be moved within said cylinder portion, and
- a spring configured to provide a biasing force to at least one of the plunger and the actuator portion, the biasing force being directed away from the interior volume. A technical benefit may include that by having a plunger guidable within a cylinder, the damping direction of the spring-loaded plunger arrangement may be well controlled.

Optionally in some examples, including in at least one preferred example, said actuator portion may be aligned with, such as overlapped by, any one of said abutment surface portions so that said externally generated force may be transferable from the abutment surface portion to the actuator portion of the spring-loaded plunger arrangement. A technical benefit may include that hereby the abutment surface portions will provide mechanical damping to shocks and/or vibrations transferred to the vehicle battery pack mounting bracket from the battery pack to e.g. the chassis frame of the vehicle, and vice versa.

Optionally in some examples, including in at least one preferred example, the spring-loaded plunger arrangement may be configured to at least partly absorb an externally generated force exerted on the bottom side of the battery pack receiving part. A technical benefit may include that the risk of a received battery pack being thrown upwards when the vehicle is travelling on a bumpy road may be reduced.

Optionally in some examples, including in at least one preferred example, the housing may be filled with a high viscous liquid providing additional damping of shocks and vibrations. A technical benefit may include that in addition to, or as an alternative to, mechanical damping, a hydraulic damping may also be provided. Hydraulic damping may be more versatile than mechanical damping, as the hydraulic damping may be able to absorb shocks and vibrations emanating from many different directions. Any suitable high viscous liquid may be used, such as high viscous liquids that are normally used for shock absorbers. For instance, different types of oils may be used. As a purely illustrative example, the high viscous liquid may have a viscosity equal to or greater than 20 mm²/s at 40 °C.

Optionally in some examples, including in at least one preferred example, the vehicle battery pack mounting bracket may further comprise an outer shell which envelopes the housing, wherein the outer shell may be made of rubber. A technical benefit may include an improved shock absorbing capability. An outer shell made of rubber may also present a gentler interface towards the battery pack, reducing the risk of inadvertent damaging of the battery pack during installation or in operation.

Optionally in some examples, including in at least one preferred example, the top side of the battery pack receiving part may be provided with conically shaped bump stops. A technical benefit may include that such conically shaped bump stops may provide variable stiffness during vertical jerks. This may improve the durability of the received battery pack.

According to a second aspect of the disclosure, there is provided a vehicle comprising the vehicle battery pack mounting bracket according to the first aspect, including any examples thereof. The second aspect of the disclosure may seek to facilitate the installation of a vehicle battery pack to the vehicle, and also facilitate subsequent service related to such a vehicle battery pack. Technical benefits may be largely analogous to those discussed previously with respect to the first aspect and its various examples.

According to a third aspect of the disclosure, there is provided a vehicle battery pack configured to be lowered onto the top side of the battery pack receiving part of the vehicle battery pack mounting bracket of the first aspect (including any example thereof), wherein the vehicle battery pack comprises:
- a first, a second and a third mating surface portion configured to mate with said first, said second and said third abutment surface portion, respectively. Analogously to the first and second aspects, the third aspect of the disclosure may also seek to achieve a corresponding facilitation. Furthermore, technical benefits may be largely analogous to those discussed previously with respect to the first aspect and its various examples.

Suitably, the first, the second and the third mating surface portions are located on respective sides of a geometrical plane of the battery pack, wherein in a Cartesian coordinate system having an x-axis, a y-axis and a z-axis:
the z-axis extends from a bottom side perpendicularly to a top side of the battery pack,
said geometrical plane extends in parallel with the x-axis and the z-axis, and perpendicularly to the y-axis,
wherein the first mating surface portion is facing in a first direction obliquely to both the x-axis and the y-axis,
wherein the second mating surface portion is facing in a different second direction obliquely to both the x-axis and the y-axis,
wherein the third mating surface portion is spaced apart from the first and the second mating surface portions along the x-axis.

The vehicle of the second aspect may suitably, in at least some examples, comprise the vehicle battery pack of the third aspect (including any example thereof).

According to a fourth aspect of the disclosure, there is provided a vehicle battery pack mounting bracket, comprising:
- a connecting part configured to be fastened to a supporting structure, such as a chassis frame, of a vehicle,
- a battery pack receiving part configured to project in a lateral direction from the connecting part in a fastened state of the connecting part with respect to said supporting structure, the battery pack receiving part having four slanted abutment surface portions each one facing in a different direction and each one being directed obliquely to the lateral direction, to a longitudinal direction and to a vertical direction.

In different examples of the vehicle battery pack mounting bracket of the fourth aspect it may be configured with the same features as mentioned above with respect to the vehicle battery pack mounting bracket of the first aspect, including an example thereof. Furthermore, the vehicle battery pack mounting bracket of the fourth aspect, including any example thereof, may be included in a vehicle of the second aspect (including any example thereof).

According to a fifth aspect of the disclosure there is provided a battery pack mounting system, comprising:
- a vehicle battery pack mounting bracket of the first or fourth aspects, including any example thereof, and
- a vehicle battery pack configured to be received by the battery pack receiving part of the vehicle battery pack mounting bracket, wherein the vehicle battery pack comprises mating surface portions configured to, in a mounted state of the battery pack, abut respective ones of the abutment surface portions of the battery pack receiving part.

In at least some examples of the mounting system of the fifth aspect, said vehicle battery pack may be the vehicle battery pack of the third aspect, including any example thereof.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** schematically illustrates a heavy-duty vehicle according to one example of this disclosure.
**FIG. 2** schematically illustrates, in a perspective view, a vehicle battery pack mounting bracket according to one example of this disclosure.
**FIG. 3** schematically illustrates, in a top view, the vehicle battery pack mounting bracket of **FIG. 2****.**
**FIG. 4** corresponds to the perspective view in **FIG. 2**, however, an outer shell of the vehicle battery pack mounting bracket has been removed.
**FIG. 5** schematically illustrates, in a cross-sectional view, the vehicle battery pack mounting bracket of **FIG. 2****.**
**FIG. 6** corresponds to the perspective view in **FIG. 5**, however, an outer shell of the vehicle battery pack mounting bracket has been removed.
**FIG. 7** very schematically illustrates the contour of a battery pack receiving part of the vehicle battery pack mounting bracket, as viewed in the top view of **FIG. 3**.
**FIGS. 8-10** illustrate other examples of possible contours of a battery pack receiving part, in accordance with other examples of the vehicle battery pack mounting bracket of this disclosure.
**FIG. 11** illustrates that a battery pack may have a matching contour to the contour of the battery pack receiving part of the vehicle battery pack mounting bracket.
**FIG. 12** schematically illustrates a vehicle battery pack mounting bracket according to another example of this disclosure.

### DETAILED DESCRIPTION

The detailed description set forth below provides information and examples of the disclosed technology with sufficient detail to enable those skilled in the art to practice the disclosure.

Today, battery packs for heavy-duty electric vehicles are often mounted to the vehicle by means of mounting brackets. Multiple tie rods are installed to counteract lateral movement of the battery packs. Not only is the assembling of all the tie rods time consuming, but each tie rod also adds considerable weight to the vehicle. A vehicle battery pack mounting bracket of this disclosure allows the number of tie rods to be reduced, since a battery pack receiving part is provided which is configured to counteract lateral movement of a received battery pack.

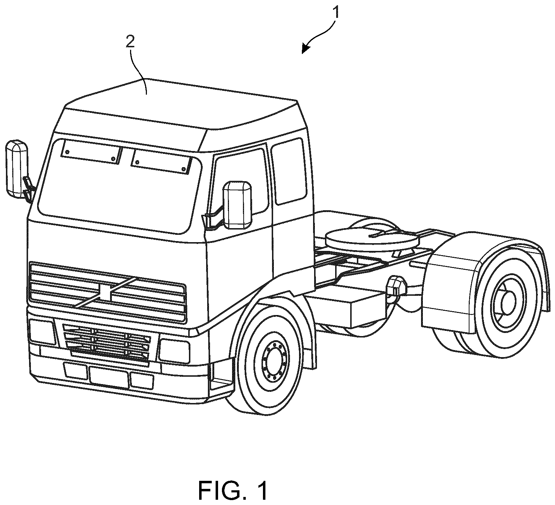

**FIG. 1** schematically illustrates a heavy-duty vehicle **1** according to one example of this disclosure. The exemplary illustration in **FIG. 1** shows a tractor unit for towing a trailer unit (not shown), which together make up a semitrailer vehicle. However, the teachings of this disclosure are applicable to other types of heavy-duty vehicles as well. For instance, the heavy-duty vehicle may be a different type of heavy-duty vehicle for cargo transport, such as a truck, or a truck with a dolly unit arranged to tow a trailer unit, etc. Other conceivable examples include a bus, construction equipment, etc. The heavy-duty vehicle **1** may, for instance, be an electric vehicle or a hybrid electric vehicle. The illustrated heavy-duty vehicle **1** comprises a cabin **2** in which a driver may operate the heavy-duty vehicle **1.** However, in other exemplary embodiments the heavy-duty vehicle **1** may be an autonomous, i.e., self-driving, heavy-duty vehicle.

The heavy-duty vehicle **1** may comprise a vehicle battery pack mounting bracket as disclosed herein (including any example thereof).

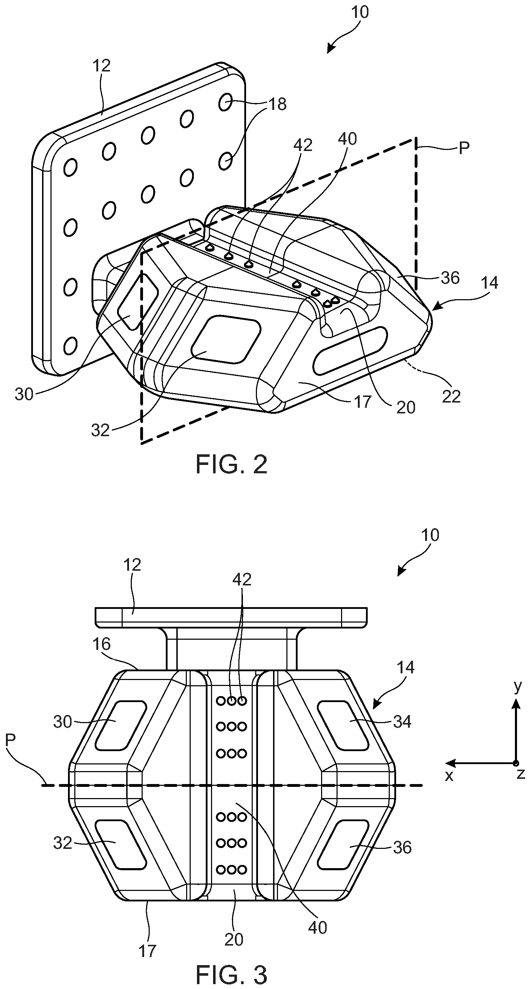

**FIG. 2** schematically illustrates, in a perspective view, a vehicle battery pack mounting bracket **10** according to one example of this disclosure. **FIG. 3** schematically illustrates, in a top view, the vehicle battery pack mounting bracket **10** of **FIG. 2****.** The vehicle battery pack mounting bracket **10** may, for example, be installed to the heavy-duty vehicle **1** shown in **FIG. 1****,** or to any other suitable heavy-duty vehicle as already discussed herein.

The vehicle battery pack mounting bracket **10** comprises a connecting part **12** and a battery pack receiving part **14.** The connecting part **12** may be fastened to a supporting structure of a vehicle. For instance, for this illustrated example, the connecting part **12** may suitably be fastened to a chassis frame or similar structure. However, it should be understood that other examples of connecting parts being connected to other structures are also conceivable. The battery pack receiving part **14** extends from the connecting part **12.** In this example, the battery pack receiving part **14** can be regarded as projecting from the connecting part **12.** After the illustrated vehicle battery pack mounting bracket **10** has been installed to the vehicle, the battery pack receiving part **14** may suitably project laterally from the connecting part **12.** Thus, in this example, the connecting part **12** is connected to a lateral side **16** (indicated in **FIG. 3****)** of the of the battery pack receiving part **14.** However, in other examples, it may be the connecting part **12** that projects, for example, vertically from the battery pack receiving part **14,** such as vertically downwards from the battery pack receiving part **14.** The connecting part **12** may be fastened to the supporting structure by any suitable fastener, such as for example by means of bolts or other threaded fasteners. For instance, as illustrated in **FIG. 2****,** the connecting part **12** may be provided with a plurality of holes **18** for receiving a suitably number of fasteners that fasten the connecting part **12** to the supporting structure.

With continued reference to **FIGS. 2** and **3****,** the battery pack receiving part **14** comprises a top side **20** and a bottom side **22** located opposite the top side **20.** In normal use, the top side **20** is configured to be upwardly of the bottom side **22** such that a battery pack to be received by the battery pack receiving part **14** is lowerable towards the top side **20.** The battery pack receiving part **14** further comprises a first abutment surface portion **30,** a second abutment surface portion **32,** and at least a third abutment surface portion **34.** In this illustrated example, there is also provided a fourth abutment surface portion **36.**

Each one of the abutment surface portions **30, 32, 34, 36** is configured to receive and support respective mating surface portions of a battery pack. Thus, when a battery pack is lowered onto the top side **20** of the battery pack receiving part **14,** the mating surface portions of the battery pack will come into contact with the respective abutment surface portions **30, 32, 34, 36** of the battery pack receiving part **14** of the vehicle battery pack mounting bracket **10.**

In order to explain the relative locations and facing directions of the abutment surface portions **30, 32, 34, 36,** a geometrical plane **P** may suitably be introduced for reference. Thus, it should be understood that this geometrical plane **P** is an imaginary reference plane and does not form a physical/structural part of the actual battery pack receiving part **14.** The first and the second abutment surface portions **30, 32** are located on respective sides of this geometrical plane **P.**

In **FIG. 3****,** a Cartesian coordinate system having an x-axis, a y-axis and a z-axis, is illustrated. The z-axis extends from the bottom side **22** perpendicularly to the top side **20** of the battery pack receiving part **14.** With respect to this Cartesian coordinate system, the geometrical plane **P** may be defined as extending in parallel with the x-axis and the z-axis, and perpendicular to the y-axis. As can be seen in **FIGS. 2** and **3****,** the first abutment surface portion **30** is facing in a first direction obliquely to both the x-axis and the y-axis. The second abutment surface portion **32** is facing in a different second direction obliquely to both the x-axis and the y-axis. By having the first and second abutment surface portions **30, 32** facing in different directions, a lateral interlocking may be achieved with mating surface portions of a battery pack received by the battery pack receiving part **14.** A lateral interlocking in this case will correspond to an interlocking in a direction parallel to the y-axis. The third abutment surface portion **34** (and in this example also the fourth abutment surface portion **36)** is spaced apart from the first and the second abutment surface portions **30, 32** along the x-axis. When mating surface portions of a received battery pack are contacted and supported by the first and second abutment surface portions **30, 32** at one end of the battery pack receiving part **14** (seen in the direction of the x-axis) and also by the third and fourth abutment surface portion **34, 36** on at the other end of the battery pack receiving part **14,** then a longitudinal interlocking may also be obtained, i.e. an interlocking in a direction parallel to the x-axis.

As can be seen in the example shown in **FIGS. 2** and **3****,** the first abutment surface portion **30** is facing away from said geometrical plane **P.** The second abutment surface portion **32** is also facing away from the geometrical plane **P,** however, in a different direction relative to the geometrical plane **P.** In particular, in this example, the first abutment surface portion **30** is slightly inclined towards the lateral side **16** connected to connecting part **12.** In contrast, the second abutment surface portion **32** is slightly inclined towards an opposite lateral side **17.** It should be understood that other configurations are available for achieving lateral interlocking between the mating surface portions of the battery pack and the first and second abutment surface portions **30, 32** (and in this case also the third and fourth abutment surface portion **34, 36),** of the battery pack receiving part **14.** Since the mating surface portions will be in contact with the first and second abutment surface portions **30, 32,** they would, in this example, such mating surface portions would be facing towards the geometrical plane **P.** However, it is fully conceivable to instead have an opposite configuration in which the first and the second abutment surface portions **30, 32** face toward the geometrical plane **P** while the respective mating surface portions of the battery pack face away from the geometrical plane **P.**

As mentioned above, both the first and the second abutment surface portions **30, 32** face in a respective direction which is oblique to the x-axis and the y-axis. As can be understood from **FIGS. 2** and **3****,** the first direction and the second direction are both oblique to the z-axis. Thus, both the first and the second abutment surface portions **30, 32** may have a somewhat upwards facing inclination. Furthermore, the first and second abutment surface portions **30, 32** also have a laterally facing inclination as well as a longitudinally facing inclination. The upwards facing inclination may provide vertical support and/or may also assist in guiding a battery pack to be received into a desired position and orientation.

In the example illustrated in **FIGS. 2** and **3****,** the battery pack receiving part **14** is illustrated as being substantially symmetrical. As already discussed above, in this example, in addition to the first and second abutment surface portions **30, 32,** the battery pack receiving part **14** also has a third and fourth abutment surface portions **34, 36.** Similarly, to the first and second abutment surface portions **30, 32,** the third and fourth abutment surface portions **34, 36,** located on respective sides of the geometrical plane **P,** may face in different directions. Thus, the third abutment surface portion **34** may face in a third direction, whereas the fourth abutment surface portion **36** may face in a different fourth direction. Both the third direction and the different fourth direction are oblique to both the x-axis and the y-axis. In particular, in this example both the third direction and the fourth direction face away from the geometrical plane **P** (the third abutment surface portion **34** being inclined to the lateral side **16** which is connected to the connecting part **12** and the through abutment surface portion **36** being inclined towards the opposite lateral side **17).** Analogously to what has been discussed above, mating surface portions of a battery pack would face towards the geometrical plane **P,** however, the reverse relationship would also be conceivable (third and fourth abutment surface portions **34, 36** facing towards the geometrical plane **P** and the mating surface portions of the battery pack facing away from the geometrical plane **P).** Furthermore, as understood from this example, both the third and the fourth direction may be oblique to the z-axis. Thus, both the third and the fourth abutment surface portions **34, 36** may have a somewhat upwards facing inclination. Similarly, both the third and the fourth abutment surface portions **34, 36** may have a somewhat longitudinally and laterally facing inclination.

As can be seen in **FIGS. 2** and **3****,** in this example there is provided an elongated groove **40** extending between the first and second abutment surface portions **30, 32** on the one hand and the third and fourth abutment surface portions **34, 36** on the other hand. The elongated groove **40** extends along the y-axis. In the following, the illustrated geometrical plane **P** will be referred to as a first geometrical plane **P.** The elongated groove **40** can be regarded as extending in a second geometrical plane (extending in parallel with the y-axis and the z-axis) which is perpendicular to the first geometrical plane **P.** Thus, the first abutment surface portions **30, 32** on the one hand, and the third and fourth abutment surface portions **34, 36** on the other hand, can be considered to be located on respective sides of such a second geometrical plane. In this illustrated example, each one of the first, second, third and fourth abutment surface portions **30, 32, 34, 36,** is facing away from such a second geometrical plane. Of course, each one of the first, second, third and fourth abutment surface portions **30, 32, 34, 36,** is also facing away from the centrally located elongated groove **40.**

As illustrated in **FIGS. 2** and **3****,** the elongated groove **40** may be provided with conically shaped bump stops **42.** This may provide variable stiffness during vertical jerks. In other examples, such conically shaped bump stops **42** may be located at other parts of the top side **20** of the battery pack receiving part **14.** Furthermore, although the elongated groove **40** may be advantageous for guiding, supporting etc. a battery pack, it should be understood that in other examples it may be omitted.

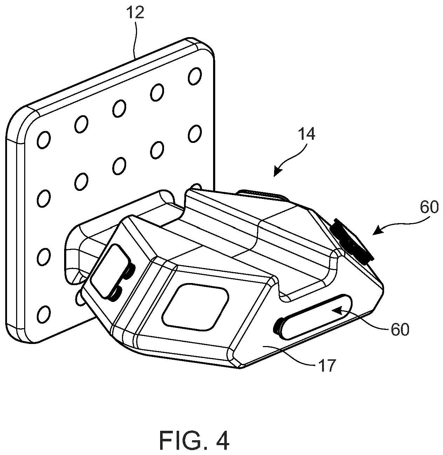

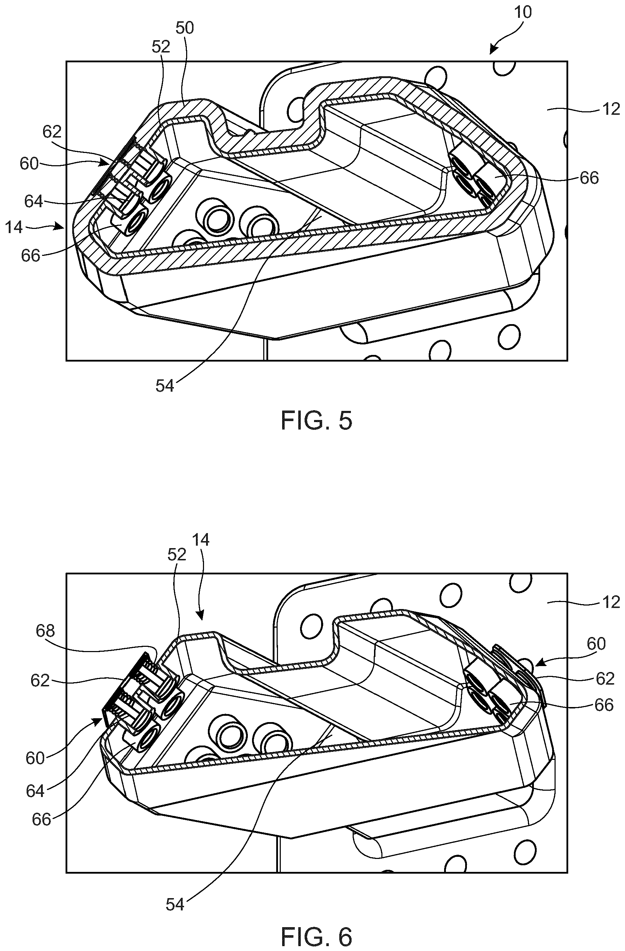

In the following, reference will be made to **FIGS. 4-6****.** **FIG. 4** corresponds to the perspective view in **FIG. 2****,** however, an outer shell **50** of the vehicle battery pack mounting bracket has been removed. **FIG. 5** schematically illustrates, in a cross-sectional view, the vehicle battery pack mounting bracket **10** of **FIG. 2**, thus including said outer shell **50.** **FIG. 6** corresponds to the perspective view in **FIG. 5**, however, said outer shell **50** of the vehicle battery pack mounting bracket **10** has been removed.

As best seen in **FIG. 5**, the battery pack receiving part **14** comprises said outer shell **50** and an inner shell which may also be referred to as a housing **52.** In **FIG. 6** the outer shell **50** has been removed from **FIG. 5**, and thus housing **52** is shown without being enclosed by the outer shell **50.** The housing **52** has an interior volume **54** and at least one spring-loaded plunger arrangement **60** configured to at least partly absorb an externally generated force which is directed towards the interior volume **54,** and which is exerted on the spring-loaded plunger arrangement **60.** As can be understood from **FIGS. 4-6****,** each one of the first, second, third and fourth abutment surface portions **30, 32, 34, 36** previously discussed in relation to **FIGS. 2-3****,** may be associated with a respective spring-loaded plunger arrangement **60.** Additionally, other locations of the battery pack receiving part **14** may also be provided with such, or similar, spring-loaded plunger arrangements **60.** For instance, as indicated in **FIG. 4**, a lateral side, in particular the previously mentioned opposite lateral side **17** of the battery pack receiving part **14** may also be provided with such a spring-loaded plunger arrangement **60,** which may be beneficial for improving lateral collision protection (as can be seen in **FIG. 4** it may have slightly different dimensions compared to the other spring-loaded plunger arrangements **60).**

As best seen in **FIGS. 5-6****,** each spring-loaded plunger arrangement **60** may comprise an actuator portion **62** which may be pressed by an externally generated force in a direction towards the internal volume **54.** As illustrated in this example, the actuator portion **62** may present a substantially planar configuration, although other configurations are also conceivable. Each spring-loaded plunger arrangement **60** further comprises a plunger **64** operatively connected to the actuator portion **62** and guidable within a cylinder portion **66.** In this example, each spring-loaded plunger arrangement **60** comprises four such plungers **64** in respective four cylinder portions **66.** Each cylinder portion **66** may form part of, or be connected to, the housing **52,** wherein movement of the actuator portion **62** causes each plunger **64** connected to the actuator portion **62** to be moved within the respective cylinder portion **66.** Furthermore, the spring-loaded plunger arrangement **60** comprises, for each plunger **64,** a spring **68** configured to provide a biasing force to at least one of the plunger **64** and the actuator portion **62,** the biasing force being directed away from the interior volume **54.**

As can be understood from **FIGS. 4-6****,** because at least some of the actuator portions **62** are aligned with and overlapped by a respective one of the abutment surface portions **30, 32, 34, 36** discussed in relation to **FIGS. 2-3****,** an externally generated force onto an abutment surface portion is transferable to the actuator portion **62** of the spring-loaded plunger arrangement **60.** Hereby, shocks and/or vibrations may be at least partly dampened.

The interior volume **54** of the housing may suitably be filled with a damping material to provide additional damping of shocks and vibrations. For instance, the housing **52** may be filled with a high viscous liquid. As regards the exterior, the outer shell **50** shown in **FIG. 5** may be made of an elastomeric material, such as rubber. This too will improve the damping effect.

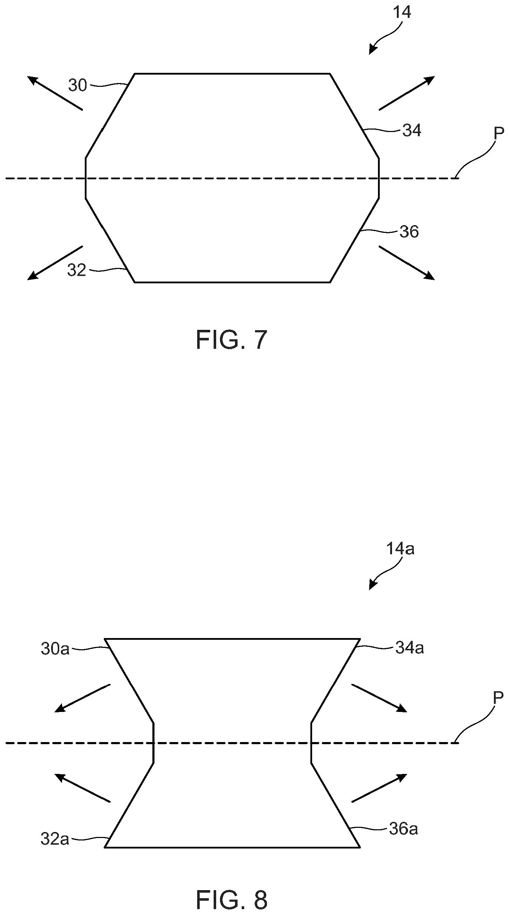

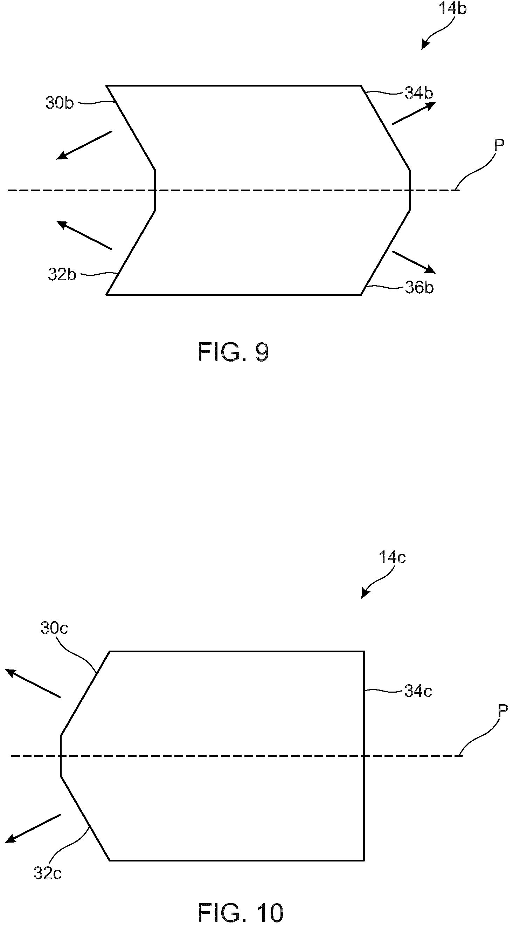

In the following, in relation to **FIGS. 7-10****,** some different conceivable geometries/configurations will be discussed with respect to the battery pack receiving part. Starting with **FIG. 7**, which very schematically illustrates the contour of the battery pack receiving part 14 of the vehicle battery pack mounting bracket **10** illustrated in **FIG. 3**. As can be seen in **FIG. 7** (and as already discussed in relation to **FIG. 3**), the first abutment surface portion **30,** the second abutment surface portion **32,** the third abutment surface portion **34** and the fourth abutment surface portion **36,** each face away from the geometrical plane in different directions as indicated by the straight arrows. However, as mentioned previously, other configurations are also conceivable. For instance, **FIG. 8** illustrates an example of another conceivable contour of the battery pack receiving part **14a.** In this example, each one of the first abutment surface portion **30a,** the second abutment surface portion **32a,** the third abutment surface portion **34a** and the fourth abutment surface portion **36a** faces towards the geometrical plane **P.** In **FIG. 9**, another example of a conceivable contour of the battery pack receiving part **14b** is illustrated. The first abutment surface portion **30b** and second abutment surface portion **32b** face toward the geometrical plane **P,** while the third abutment surface portion **34b** and the fourth abutment surface portion **36b** face away from the geometrical plane **P.** **FIG. 10** illustrates yet another contour of a battery pack receiving part **14c,** wherein instead of having a third and a fourth abutment surface portion, it is conceivable to have just a third abutment surface portion **34c,** which in this case is illustrated as being enlarged relative to the either one of the first and the second abutment surface portions **30c, 32c.**

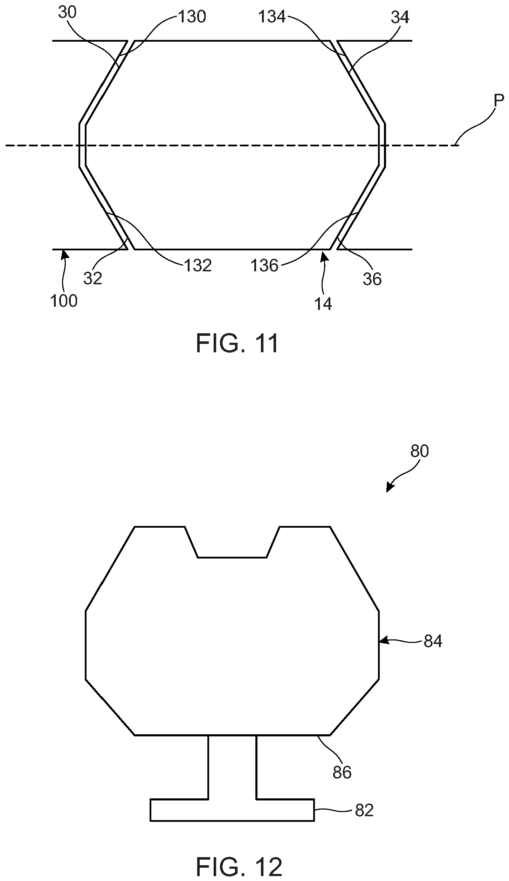

**FIG. 11** illustrates, very schematically, that a battery pack **100** may have a matching contour to the contour of the battery pack receiving part **14** of the vehicle battery pack mounting bracket. In this example the battery pack receiving part **14** has the same contour as in **FIG. 7****.** In this example, it is also illustrated that the contour of the battery pack 100 that is to be supported by the battery pack receiving part **14** may suitably be complementary to the contour of the battery pack receiving part **14.** Thus, while the first, second, third and fourth abutment portions **30, 32, 34, 36** all face away from the geometrical plane **P,** the mating surface portions **130, 132, 134, 136** of the battery pack **100** all face in a respective opposite direction, i.e. towards the geometrical plane **P.** Likewise, it will be appreciated that corresponding complementary battery pack contours, could of course be adapted to the respective contours illustrated in **FIG. 8-10****.** Furthermore, although **FIG. 11** only shows the contour along the x-axis and y-axis, it should be understood that the matting portions of the battery pack **100** may suitably also have a complementary contour with respect to the z-axis. Thus, if an abutment surface portion **30, 32, 34, 36** is inclined upwardly, the respective mating surface portion **130, 132, 134, 136** of the battery pack **100** would be the opposite, i.e. inclined downwardly.

**FIG. 12** schematically illustrates a vehicle battery pack mounting bracket **80** according to another example of this disclosure. In contrast to the example illustrated in **FIGS. 2-6****,** in which the connecting part **12** is connected to a lateral side **16** of the battery pack receiving part **14,** in the example of **FIG. 12** the connecting part **82** is instead connected to a bottoms side **86** of the battery pack receiving part **84,** and may thus be attached to a different supporting structure of the vehicle. The battery pack receiving part **84** may, apart from its connection to the connecting part **82,** have any one of the features discussed herein with respect to any other example of the battery pack receiving part.

Example 1: A vehicle battery pack mounting bracket, comprising:
- a connecting part configured to be fastened to a supporting structure of a vehicle,
- a battery pack receiving part extending from the connecting part, the battery pack receiving part having:
   - a top side towards which a battery pack to be received is lowerable,
   - a bottom side opposite to the top side,
   - a first abutment surface portion,
   - a second abutment surface portion, and
   - at least a third abutment surface portion,

wherein the first, the second and the third abutment surface portions are configured to receive and support respective mating surface portions of a battery pack, wherein the first and the second abutment surface portions are located on respective sides of a geometrical plane, wherein in a Cartesian coordinate system having an x-axis, a y-axis and a z-axis:
   - the z-axis extends from said bottom side perpendicularly to said top side,
   - said geometrical plane extends in parallel with the x-axis and the z-axis, and perpendicularly to the y-axis,
wherein the first abutment surface portion is facing in a first direction obliquely to both the x-axis and the y-axis,
wherein the second abutment surface portion is facing in a different second direction obliquely to both the x-axis and the y-axis,
wherein the third abutment surface portion is spaced apart from the first and the second abutment surface portions along the x-axis.

Example 2: The vehicle battery pack mounting bracket of example 1, wherein the first abutment surface portion is facing away from said geometrical plane in said first direction, and wherein the second abutment surface portion is facing away from said geometrical plane in said different second direction.

Example 3: The vehicle battery pack mounting bracket of any of examples 1-2, wherein said first direction is oblique to the z-axis, and
wherein said second direction is oblique to the z-axis.

Example 4: The vehicle battery pack mounting bracket of example 3, wherein said top side is located upwardly of said opposite bottom side with respect to the z-axis, wherein the first abutment surface portion is facing obliquely upwardly with respect to the z-axis, wherein the second abutment surface portion is facing obliquely upwardly with respect to the z-axis.

Example 5: The vehicle battery pack mounting bracket of any of examples 1-4, further comprising: a fourth abutment surface portion configured to receive and support a respective mating surface portion of a battery pack, wherein the third and the fourth abutment surface portions are located on respective sides of said geometrical plane, wherein the third abutment surface portion is facing in a third direction obliquely to both the x-axis and the y-axis, wherein the fourth abutment surface portion is facing in a different fourth direction obliquely to both the x-axis and the y-axis.

Example 6: The vehicle battery pack mounting bracket of example 5, wherein the third abutment surface portion is facing away from said geometrical plane in said third direction, and wherein the fourth abutment surface portion is facing away from said geometrical plane in said different fourth direction.

Example 7: The vehicle battery pack mounting bracket of any of examples 5-6, wherein said third direction is oblique to the z-axis, and
wherein said fourth direction is oblique to the z-axis.

Example 8: The vehicle battery pack mounting bracket of any of examples 1-7, wherein said geometrical plane is a first geometrical plane, wherein in relation to a second geometrical plane which is perpendicular to the first geometrical plane, and which extends in parallel with the y-axis and the z-axis, the first and the second abutment surface portions on the one hand and the third and the fourth abutment surface portions on the other hand are located on respective sides of the second geometrical plane.

Example 9: The vehicle battery pack mounting bracket of example 8, wherein each one of the first, second, third and fourth abutment surface portions is facing away from said second geometrical plane.

Example 10: The vehicle battery pack mounting bracket of any of examples 8-9, further comprising an elongated groove extending along the y-axis in said second geometrical plane.

Example 11: The vehicle battery pack mounting bracket of any of examples 1-10, wherein the battery pack receiving part further comprises a housing having an interior volume and at least one spring-loaded plunger arrangement, wherein the spring-loaded plunger arrangement is configured to at least partly absorb an externally generated force which is directed towards the interior volume, and which is exerted on the spring-loaded plunger arrangement.

Example 12: The vehicle battery pack mounting bracket of example 11, wherein the spring-loaded plunger arrangement comprises:
- an actuator portion which may be pressed by said externally generated force in a direction towards said internal volume,
- a plunger operatively connected to the actuator portion and guidable within a cylinder portion which forms part of, or which is connected to the housing, wherein movement of the actuator portion causes the plunger to be moved within said cylinder portion, and
- a spring configured to provide a biasing force to at least one of the plunger and the actuator portion, the biasing force being directed away from the interior volume.

Example 13: The vehicle battery pack mounting bracket of example 12, wherein said actuator portion is aligned with, such as overlapped by, any one of said abutment surface portions so that said externally generated force is transferable from the abutment surface portion to the actuator portion of the spring-loaded plunger arrangement.

Example 14: The vehicle battery pack mounting bracket of any of examples 11-13, wherein the spring-loaded plunger arrangement is configured to at least partly absorb an externally generated force exerted on the bottom side of the battery pack receiving part.

Example 15: The vehicle battery pack mounting bracket of any of examples 11-14, wherein the housing is filled with a high viscous liquid providing additional damping of shocks and vibrations.

Example 16: The vehicle battery pack mounting bracket of any of examples 11-15, further comprising an outer shell which envelopes the housing, wherein the outer shell is made of rubber.

Example 17: The vehicle battery pack mounting bracket of any of examples 1-16, wherein the top side of the battery pack receiving part is provided with conically shaped bump stops.

Example 18: A vehicle comprising the vehicle battery pack mounting bracket according to any of examples 1-17.

Example 19: A vehicle battery pack configured to be lowered onto the top side of the battery pack receiving part of the vehicle battery pack mounting bracket of any of examples 1-17, wherein the vehicle battery pack comprises:
- a first, a second and a third mating surface portion configured to mate with said first, said second and said third abutment surface portion, respectively.

Example 20: The vehicle battery pack of example 19, wherein the first, the second and the third mating surface portions are located on respective sides of a geometrical plane of the battery pack, wherein in a Cartesian coordinate system having an x-axis, a y-axis and a z-axis:
the z-axis extends from a bottom side perpendicularly to a top side of the battery pack,
said geometrical plane extends in parallel with the x-axis and the z-axis, and perpendicularly to the y-axis,
wherein the first mating surface portion is facing in a first direction obliquely to both the x-axis and the y-axis,
wherein the second mating surface portion is facing in a different second direction obliquely to both the x-axis and the y-axis,
wherein the third mating surface portion is spaced apart from the first and the second mating surface portions along the x-axis.

Example 21: The vehicle of example 18, further comprising the vehicle battery pack of any of examples 19-20.

Example 22: A vehicle battery pack mounting bracket, comprising:
- a connecting part configured to be fastened to a supporting structure, such as a chassis frame, of a vehicle,
- a battery pack receiving part configured to project in a lateral direction from the connecting part in a fastened state of the connecting part with respect to said supporting structure, the battery pack receiving part having four slanted abutment surface portions each one facing in a different direction and each one being directed obliquely to the lateral direction, to a longitudinal direction and to a vertical direction.

Example 23: The vehicle battery pack mounting bracket of example 22, further comprising any of the features of the vehicle battery pack mounting bracket of any of examples 1-17.

Example 24: A battery pack mounting system, comprising:
- a vehicle battery pack mounting bracket of any of examples 1-17 or 23, and
- a vehicle battery pack configured to be received by the battery pack receiving part of the vehicle battery pack mounting bracket, wherein the vehicle battery pack comprises mating surface portions configured to, in a mounted state of the battery pack, abut respective ones of the abutment surface portions of the battery pack receiving part.

Example 25: The battery pack mounting system of example 24, wherein said vehicle battery pack is the vehicle battery pack of any of examples 19-20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle battery pack mounting bracket, comprising:
- a connecting part configured to be fastened to a supporting structure of a vehicle,
- a battery pack receiving part extending from the connecting part, the battery pack receiving part having:
• a top side towards which a battery pack to be received is lowerable,
• a bottom side opposite to the top side,
• a first abutment surface portion,
• a second abutment surface portion, and
• at least a third abutment surface portion,
wherein the first, the second and the third abutment surface portions are configured to receive and support respective mating surface portions of a battery pack, wherein the first and the second abutment surface portions are located on respective sides of a geometrical plane,
wherein in a Cartesian coordinate system having an x-axis, a y-axis and a z-axis:
• the z-axis extends from said bottom side perpendicularly to said top side,
• said geometrical plane extends in parallel with the x-axis and the z-axis, and perpendicularly to the y-axis,
wherein the first abutment surface portion is facing in a first direction obliquely to both the x-axis and the y-axis,
wherein the second abutment surface portion is facing in a different second direction obliquely to both the x-axis and the y-axis,
wherein the third abutment surface portion is spaced apart from the first and the second abutment surface portions along the x-axis.

2. The vehicle battery pack mounting bracket of claim 1, wherein the first abutment surface portion is facing away from said geometrical plane in said first direction, and wherein the second abutment surface portion is facing away from said geometrical plane in said different second direction.

3. The vehicle battery pack mounting bracket of any of claims 1-2,
wherein said first direction is oblique to the z-axis, and
wherein said second direction is oblique to the z-axis.

4. The vehicle battery pack mounting bracket of claim 3, wherein said top side is located upwardly of said opposite bottom side with respect to the z-axis, wherein the first abutment surface portion is facing obliquely upwardly with respect to the z-axis, wherein the second abutment surface portion is facing obliquely upwardly with respect to the z-axis.

5. The vehicle battery pack mounting bracket of any of claims 1-4, further comprising:
a fourth abutment surface portion configured to receive and support a respective mating surface portion of a battery pack, wherein the third and the fourth abutment surface portions are located on respective sides of said geometrical plane,
wherein the third abutment surface portion is facing in a third direction obliquely to both the x-axis and the y-axis,
wherein the fourth abutment surface portion is facing in a different fourth direction obliquely to both the x-axis and the y-axis.

6. The vehicle battery pack mounting bracket of claim 5, wherein the third abutment surface portion is facing away from said geometrical plane in said third direction, and wherein the fourth abutment surface portion is facing away from said geometrical plane in said different fourth direction.

7. The vehicle battery pack mounting bracket of any of claims 5-6,
wherein said third direction is oblique to the z-axis, and
wherein said fourth direction is oblique to the z-axis.

8. The vehicle battery pack mounting bracket of any of claims 1-7, wherein said geometrical plane is a first geometrical plane, wherein in relation to a second geometrical plane which is perpendicular to the first geometrical plane, and which extends in parallel with the y-axis and the z-axis, the first and the second abutment surface portions on the one hand and the third and the fourth abutment surface portions on the other hand are located on respective sides of the second geometrical plane.

9. The vehicle battery pack mounting bracket of claim 8, wherein each one of the first, second, third and fourth abutment surface portions is facing away from said second geometrical plane.

10. The vehicle battery pack mounting bracket of any of claims 8-9, further comprising an elongated groove extending along the y-axis in said second geometrical plane.

11. The vehicle battery pack mounting bracket of any of claims 1-10, wherein the battery pack receiving part further comprises a housing having an interior volume and at least one spring-loaded plunger arrangement, wherein the spring-loaded plunger arrangement is configured to at least partly absorb an externally generated force which is directed towards the interior volume, and which is exerted on the spring-loaded plunger arrangement.

12. The vehicle battery pack mounting bracket of claim 11, wherein the spring-loaded plunger arrangement comprises:
- an actuator portion which may be pressed by said externally generated force in a direction towards said internal volume,
- a plunger operatively connected to the actuator portion and guidable within a cylinder portion which forms part of, or which is connected to the housing, wherein movement of the actuator portion causes the plunger to be moved within said cylinder portion, and
- a spring configured to provide a biasing force to at least one of the plunger and the actuator portion, the biasing force being directed away from the interior volume.

13. The vehicle battery pack mounting bracket of claim 12, wherein said actuator portion is aligned with, such as overlapped by, any one of said abutment surface portions so that said externally generated force is transferable from the abutment surface portion to the actuator portion of the spring-loaded plunger arrangement.

14. The vehicle battery pack mounting bracket of any of claims 11-13, further comprising an outer shell which envelopes the housing, wherein the outer shell is made of rubber.

15. A vehicle comprising the vehicle battery pack mounting bracket according to any of claims 1-14.
